# EUROPÄISCHE PATENTSCHRIFT

(11) **EP 1 297 924 B1**
(45) Veröffentlichungstag und Bekanntmachung des Hinweises auf die Patenterteilung: **09.03.2005**
(21) Anmeldenummer: 02405821.6
(22) Anmeldetag: 23.09.2002
(51) Int. Cl.: B23D 57/00, B28D 1/08

(54) **Seilsäge**
Wire saw
Scie à fil

(30) Priorität: 01.10.2001 DE 10148492
(43) Veröffentlichungstag der Anmeldung: 02.04.2003
(73) Patentinhaber: HILTI Aktiengesellschaft, 9494 Schaan (LI)
(72) Erfinder: Plattner, Josef, 6200 Gallzein (AT); Hans-Jörg, Rieger, 6712 Thüringen (AT)
(74) Vertreter: Wildi, Roland

(56) Entgegenhaltungen:
- WO-A-95/18692
- US-A- 4 765 307
- US-A- 5 875 771
- PATENT ABSTRACTS OF JAPAN vol. 1998, no. 12, 31. Oktober 1998 (1998-10-31) -& JP 10 193331 A (DIA RAITO KK), 28. Juli 1998 (1998-07-28)

## Beschreibung

Die Erfindung betrifft eine Vorrichtung zur Umlenkung eines Sägeseiles gemäss dem Oberbegriff des Patentanspruchs 1.

Zum Zerschneiden von Naturstein, Beton, Stahlbeton und ähnlichen Baustoffen werden Seilsägeanlagen verwendet, mit denen Sägeseile, die mit Diamantsegmenten bestückt sind, angetrieben und durch das zu schneidende Material geführt werden. Zur Umlenkung des Sägeseiles in verschiedene Richtungen wird wenigstens eine Vorrichtung verwendet, wie sie beispielsweise aus der US 5 875 771 bekannt ist. Diese Vorrichtung setzt sich aus einem Trägerelement und zwei an dem Trägerelement drehschlüssig festlegbaren Umlenkelementen zusammen, die zwei im wesentlichen parallel zueinander erstreckende Trägerarme, jeweils eine Umlenkrolle und jeweils eine die Trägerarme durchsetzende, die Umlenkrollen tragende Drehachsen aufweist. Die Umlenkrollen weisen an ihrer umfangsseitigen Aussenkontur eine auf den Querschnitt des Sägeseiles abgestimmte, umlaufende Laufrille auf. Ein in den Laufrillen beider Umlenkrollen geführtes Sägeseil, erstreckt sich von einer Umlenkrolle durch das Trägerelement hindurch zur nächsten Umlenkrolle.

Beim Arbeiten mit Seilsägeanlagen kommt es aufgrund von Schnittkraftschwankungen bzw. auftretenden Schwingungen des Sägeseiles vor, dass das Sägeseil aus der Laufrille einer der Umlenkrollen in einen Freiraum springt, der sich zwischen der Umlenkrolle und den seitlich von der Umlenkrolle beabstandeten Trägerarmen erstreckt. Wird der Fehler nicht gleich erkannt, bzw. die Seilsägeanlage unmittelbar nach dem Herausspringen des Sägeseils zum Stillstand gebracht, zersägt das Sägeseil Teile der Seilsägeanlage. Bei Arbeiten, wo dem Anwender die unmittelbare Sicht zu den einzelnen Umlenkrollen verdeckt ist, beispielsweise beim Tauchseilsägen, kann dieses Problem auch durch höchste Aufmerksamkeit des Anwenders nicht vermieden werden.

Aus der US 4 765 307 ist ein Umlenkelement für eine Seilsäge zu entnehmen an dem mehrere Führungsrollen angeordnet sind. Ein Teil zum Verhindern eines Herausspringens des Seiles aus der Umlenkrolle umfasst eine Rolle, die über Schwenkarme an der Achse der Umlenkrolle gehalten ist, oder einen bogenförmigen Fender der ebenfalls an der Achse der Umlenkrolle gehalten ist.

Der Erfindung liegt die Aufgabe zugrunde, eine einfach und wirtschaftlich herstellbare Vorrichtung zur Umlenkung eines Sägeseiles zu schaffen, bei der sich das Umlenkelement gegenüber dem Trägerelement schnell sowie sicher verdrehen lässt, damit das Sägeseil, selbst bei Schwingungen des Sägeseiles, immer in den Laufrillen der Umlenkrollen geführt bleibt.

Die Lösung dieser Aufgabe erfolgt durch eine Vorrichtung zur Umlenkung eines Sägeseils, welche die im kennzeichnenden Abschnitt des Patentanspruchs 1 angeführten Merkmale aufweist.

Bei der erfindungsgemässen Vorrichtung zur Umlenkung des Sägeseils sorgen die beiden, beispielsweise von den Trägerarmen gebildeten Führungsflächen dafür, dass das Sägeseil immer im Bereich der umfangsseitigen Aussenkontur jeder Umlenkrolle verbleibt, selbst dann, wenn es einmal aus der Laufrille herausspringen sollte. Beim Wiederherstellen der Sägeseilspannung und mit Hilfe einer speziell ausgeformten umfangsseitigen Aussenkontur, deren Durchmesser zur Laufrille hin abnimmt, gelangt das Sägeseil selbständig zurück in die Führungsrille der Umlenkrolle. Die Umlenkrolle weist beispielsweise einen starren, scheibenförmigen Trägerkörper auf. Der Umfangsbereich, der auch die umlaufende Laufrille aufweist, besteht beispielsweise aus einem elastischen Material. Dieses elastische Material kann Gummi sein, der auf dem Trägerkörper aufvulkanisiert ist.

Damit das Sägeseil über einen grossen Teil des Umfangs der Umlenkrolle seitlich geführt werden kann, erstrecken sich zweckmässigerweise die Führungsflächen über 25 % bis 100% des Umfangs der Umlenkrolle.

Beschädigung der beiden Trägerarme durch das Sägeseil werden vorzugsweise dadurch verhindert, indem die Führungsflächen von auswechselbaren, an den Trägerarmen befestigbaren Verschleisselementen gebildet sind. Die Auswechselbarkeit hat zudem den Vorteil, dass der Abstand der Führungsflächen voneinander veränderbar ist, indem Verschleisselemente mit unterschiedlichen Stärken an den beiden Trägerarmen befestigt werden. Die Verschleisselemente können wahlweise aus einem verschleissfesten oder leicht verschleissbaren Material gebildet sein.

Durch die hohe Wechselbiegebeanspruchung denen das Sägeseil ausgesetzt ist, kann es gelegentlich zum Bruch des Sägeseils kommen. Beim Bruch des Sägeseils kommt es meist zu einem Peitschenschlag im Bereich des Trägerelementes, durch das sich das Sägeseil erstreckt, wodurch das Sägeseil in Folge an dieser Stelle geknickt wird und mehrere Meter des Sägeseils unbrauchbar werden können. Zur Verhinderung dieser Peitschenschläge des Sägeseils ist zweckmässigerweise zwischen der Umlenkrolle und dem Aufnahmebereich, sowie zwischen den Führungsflächen eine Sägeseilschlagschutzrolle drehbar angeordnet, deren Drehachse parallel zur Drehachse der Umlenkrolle verläuft.

Damit das Sägeseil bei auftretenden Wechselbiegebeanspruchungen nicht aus der Laufrille der Umlenkrolle herausspringen kann, entspricht vorzugsweise der senkrecht zur Drehachse der Umlenkrolle gemessene Abstand zwischen der Umlenkrolle und der Sägeseilschlagschutzrolle im wesentlichen dem Querschnitt des Sägeseiles.

Als Zentrierhilfe für das Sägeseil dient zweckmässigeweise eine mit einer umlaufenden Vertiefung versehene Aussenkontur der Sägeseilschlagschutzrolle.

Die Diamantsegmente des Sägeseiles bestehen aus Diamanten sowie Matrixmaterial, das auf Schläge empfindlich ist. Um Beschädigungen dieser Diamantsegmente verhindern zu können, wenn das Sägeseil schwingt und gegen die Sägeseilschlagschutzrolle prallt, ist wenigstens der umfangsseitige Endbereich der Sägeseilschlagschutzrolle aus einem elastischen Material gebildet. Bei diesem Material handelt es sich beispielsweise um Gummi oder Kunststoff.

Insbesondere dann, wenn mit der Sägeanlage Arbeiten durchgeführt werden, bei denen Kühlwasser verwendet werden muss, ergeben sich grossflächige Verschmutzungen des Arbeitsumfeldes, da das Sägeseil eine hohe Laufgeschwindigkeit (ca. 27 m/sec) aufweist und das Kühlwasser an den Stellen, an denen eine Umlenkung des Sägeseiles stattfindet, in die Umgebung geschleudert wird. Diese grossflächigen Verschmutzungen werden vorzugsweise dadurch verhindert, indem der Umfang der Umlenkrolle mit einer Abdeckung wenigstens teilweise abdeckbar ist.

Die Abdeckung weist vorteilhafterweise wenigstens zwei, der Festlegung der Abdeckung an den Trägerarmen dienende Klemmelemente auf, die sich über wenigstens einen Teil der gesamten Länge der Abdeckung erstrecken. Die Abdeckung ist beispielsweise aus Gummi oder Kunststoff gebildet. Die Klemmelemente lassen sich in einer senkrecht zur Drehachse der Umlenkrolle verlaufenden Richtung auf die beiden Trägerarme aufstecken. Entlang dieser Trägerarme kann die gesamte Abdeckung verschoben werden, da der Abgangswinkel des Sägeseils zwischen 0° und ca. 180° variieren kann.

Die Erfindung wird anhand von Zeichnungen, die ein Ausführungsbeispiel wiedergeben, näher erläutert. Es zeigen:
- Fig.1: eine erfindungsgemässe Vorrichtung zur Umlenkung eines Sägeseiles in der Seitenansicht;
- Fig. 2: eine erfindungsgemässe Abdeckung gemäss Fig. 1 in der Unteransicht;
- Fig. 3: eine Seitenansicht der Abdeckung gemäss Fig. 2;
- Fig.4: eine Draufsicht auf die Vorrichtung gemäss Fig. 1, ohne Sägeseil.

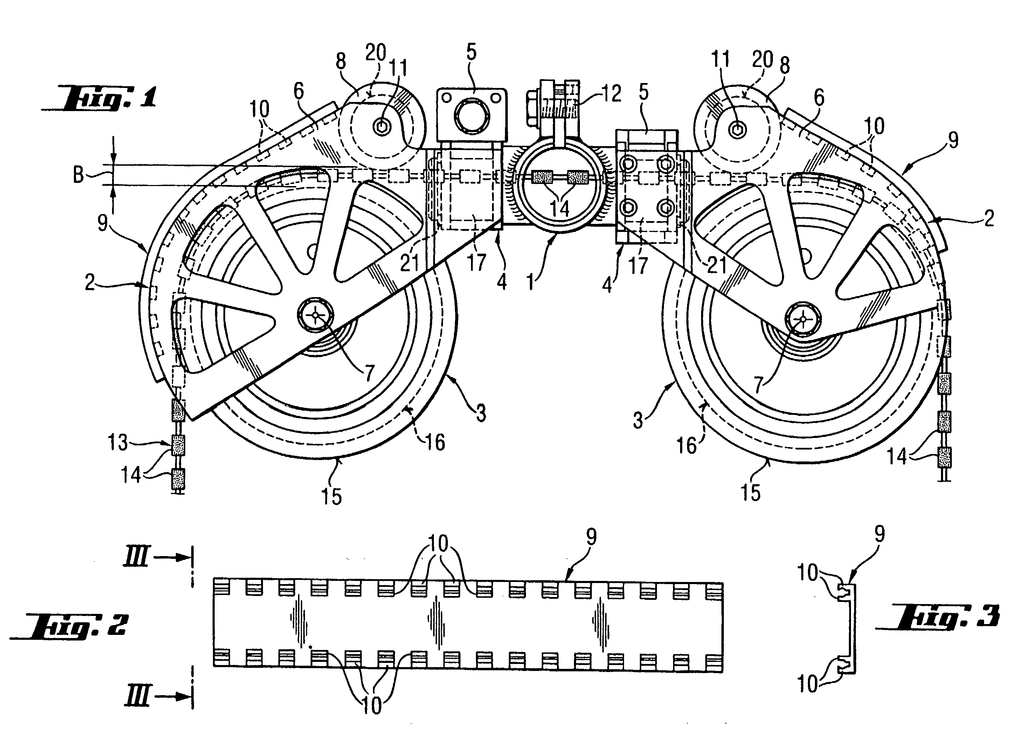

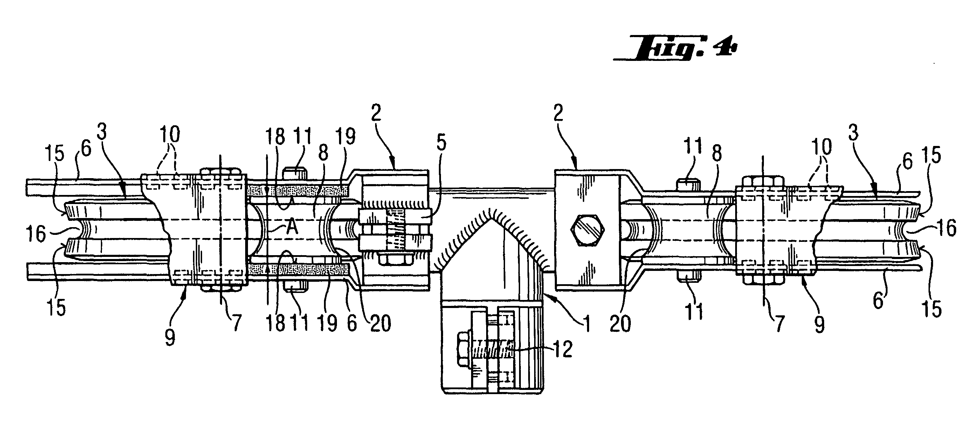

Die in den Fig. 1 und 4 dargestellte, der Umlenkung eines mit Diamantensegmenten 14 bestückten Sägeseils 13 dienende Vorrichtung einer nicht näher dargestellten Seilsägeanlage weist ein von dem Sägeseil 13 durchsetztes Trägerelement 1 und wenigstens ein an dem mit Spannmitteln 12 befestigbares Trägerelement 1 drehschlüssig festlegbares Umlenkelement 2 auf. Das Umlenkelement 2 besitzt einen mit dem Trägerelement 1 in Verbindung bringbaren Aufnahmebereich 4, sowie zwei sich parallel zueinander erstreckende Trägerarme 6 auf. Die Aufnahmebereiche 4 sind in Form zylindrischer Bohrungen ausgebildet, die auf zylindrischen Lagerzapfen 17 der Trägerelemente 1 stecken und gegenüber diesen verdrehbar sind. Der drehschlüssigen Festlegung der Umlenkelemente 2 an dem Trägerelement 1 dient jeweils ein mit dem Aufnahmebereich 4 zusammenwirkendes Spannmittel 5, mit dem der lichte Querschnitt des Aufnahmebereiches 4 reduziert werden kann. Der axialen Festlegung der Umlenkelemente 2 an dem Trägerelement 1 dient jeweils ein nicht dargestellter Sicherungsring 21, der in eine den Lagerzapfen aussen umgebende Nut ragt.

Zwischen den Trägerarmen 6 ist eine Umlenkrolle 3 drehbar gelagert, die an ihrer umfangsseitigen Aussenkontur 15 eine auf den Querschnitt des Sägeseils 13 abgestimmte, umlaufende Laufrille 16 aufweist. Das Umlenkelement 2 weist in einem die Aussenkontur der Umlenkrolle 3 überragenden Bereich zwei einander zugewandte, senkrecht zur Drehachse 7 der Umlenkrolle 3 erstreckende Führungsflächen 18 auf. Der Abstand A der beiden Führungsflächen 18 voneinander ist grösser als der Querschnitt des Sägeseiles 13 und enstspricht höchstens im wesentlichen der parallel zur Drehachse 7 gemessenen Breite der Umlenkrolle 3. Die beiden Führungsflächen 18 erstrecken sich über 40 % bzw. 50% des Umfangs der Umlenkrolle 3 und werden bei einem Umlenkelement 2 von auswechselbaren, an den Trägerarmen 6 befestigbaren Verschleisselementen 19 und beim anderen Umlenkelement 2 von den beiden Trägerarmen 6 gebildet. Die Verschleisselemente 19 sind beispielsweise aus Stahl, Holz oder Kunststoff gefertigt.
Zwischen der Umlenkrolle 3 und dem Aufnahmebereich 4, sowie zwischen den Führungsflächen 18 ist eine Sägeseilschlagschutzrolle 8 drehbar angeordnet, deren Drehachse 11 parallel zur Drehachse 7 der Umlenkrolle 3 verläuft. Ein senkrecht zur Drehachse 7 der Umlenkrolle 3 gemessener Abstand B zwischen der Umlenkrolle 3 und der Sägeseilschlagschutzrolle 8 entspricht im wesentlichen dem Querschnitt des Sägeseiles 13, 14.

Die umfangsseitige Aussenkontur der Sägeseilschlagschutzrolle 8 ist mit einer umlaufenden Vertiefung 20 versehen, die sich beispielsweise fast über die gesamte Breite der Sägeseilschlagschutzrolle 8 erstreckt. Die grösste Tiefe der Vertiefung 20 befindet sich in der Mitte der Sägeseilschlagschutzrolle 8 direkt über der Laufrille 16 der Umlenkrolle 3. Zumindest der umfangsseitige Endbereich der Sägeseilschlagschutzrolle 8, in dem auch die Vertiefung 20 angeordnet ist, besteht aus einem elastischen Material, beispielsweise Gummi.

Ein Teil des Umfanges der Umlenkrolle 3 ist mit einer in Fig. 2 und 3 dargestellten Abdeckung 9 abdeckbar. Die Abdeckung 9 weist an beiden Seitenrändern mehrere hintereinander angeordnete Klemmelemente 10 auf, die auf die beiden Trägerarme 6 aufsteckbar sind.

## Patentansprüche

1. Vorrichtung zur Umlenkung eines Sägeseils (13) mit einem von dem Sägeseil (13) durchsetzten Trägerelement (1) und wenigstens einem an dem Trägerelement (1) drehschlüssig festlegbaren Umlenkelement (2), das einen mit dem Trägerelement (1) in Verbindung bringbaren Aufnahmebereich (4) sowie zwei sich parallel zueinander erstreckende Trägerarme (6) aufweist, zwischen denen eine Umlenkrolle (3) drehbar gelagert ist, die an ihrer umfangsseitigen Aussenkontur (15) eine auf den Querschnitt des Sägeseils (13) abgestimmte, umlaufende Laufrille (16) aufweist, **dadurch gekennzeichnet, dass** das Umlenkelement (2) in einem die Aussenkontur der Umlenkrolle (3) überragenden Bereich zwei einander zugewandte, senkrecht zur Drehachse (7) der Umlenkrolle (3) erstreckende Führungsflächen (18) aufweist, wobei der Abstand (A) der beiden Führungsflächen (18) voneinander grösser ist als der Querschnitt des Sägeseiles (13) und höchstens im wesentlichen der parallel zur Drehachse (7) gemessenen Breite der Umlenkrolle (3) entspricht.

2. Vorrichtung nach Anspruch 1, **dadurch gekennzeichnet, dass** sich die Führungsflächen (18) über 25 % bis 100% des Umfangs der Umlenkrolle (3) erstrecken.

3. Vorrichtung nach Anspruch 1 oder 2, **dadurch gekennzeichnet, dass** die Führungsflächen (18) von auswechselbaren, an den Trägerarmen (6) befestigbaren Verschleisselementen (19) gebildet sind.

4. Vorrichtung nach einem der Ansprüche 1 bis 3, **dadurch gekennzeichnet, dass** zwischen der Umlenkrolle (3) und dem Aufnahmebereich (4), sowie zwischen den den Führungsflächen (18) eine Sägeseilschlagschutzrolle (8) drehbar angeordnet ist, deren Drehachse (11) parallel zur Drehachse (7) der Umlenkrolle (3) verläuft.

5. Vorrichtung nach Anspruch 4, **dadurch gekennzeichnet, dass** der senkrecht zur Drehachse (7) der Umlenkrolle (3) gemessene Abstand (B) zwischen der Umlenkrolle (3) und der Sägeseilschlagschutzrolle (8) im wesentlichen dem Querschnitt des Sägeseiles (13) entspricht.

6. Vorrichtung nach Anspruch 4 oder 5, **dadurch gekennzeichnet, dass** die Aussenkontur (15) der Sägeseilschlagschutzrolle (8) mit einer umlaufenden Vertiefung (20) versehen ist.

7. Vorrichtung nach einem der Ansprüche 4 bis 6, **dadurch gekennzeichnet, dass** wenigstens der umfangsseitige Endbereich der Sägeseilschlagschutzrolle (8) aus einem elastischen Material gebildet ist.

8. Vorrichtung nach einem der Ansprüche 1 bis 7, **dadurch gekennzeichnet, dass** der Umfang der Umlenkrolle (3) mit einer Abdeckung (9) wenigstens teilweise abdeckbar ist.

9. Vorrichtung nach Anspruch 8, **dadurch gekennzeichnet, dass** die Abdeckung (9) wenigstens zwei, der Festlegung der Abdeckung an den Trägerarmen (6) dienende Klemmelemente (10) aufweist, die sich über wenigstens einen Teil der gesamten Länge der Abdeckung erstrecken.

## Claims

1. Device for deflecting a saw cable (13), comprising a supporting element (1) traversed by the saw cable (13) and at least one deflecting element (2) which can be fixed in a torsionally rigid manner to the supporting element (1) and which has a receiving region (4) which can be connected to the supporting element (1) and two supporting arms (6) extending parallel to one another, between which a deflecting roller (3) provided on its circumferential outer contour (15) with a circumferential groove (16) adapted to the cross section of the saw cable (13) is rotatably mounted, **characterised in that** the deflecting element (2) is provided in a region projecting beyond the outer contour of the deflecting roller (3) with two guide surfaces (18) directed towards one another and extending perpendicularly to the axis of rotation (7) of the deflecting roller (3), the distance (A) between the two guide surfaces (18) being greater than the cross section of the saw cable (13) and substantially corresponding at most to the width of the deflecting roller (3) as measured parallel to the axis of rotation (7).

2. Device according to claim 1, **characterised in that** the guide surfaces (18) extend over 25 % to 100 % of the circumference of the deflecting roller (3).

3. Device according to claim 1 or claim 2, **characterised in that** the guide surfaces (18) are formed by exchangeable wearing elements (19) which can be secured to the supporting arms (6).

4. Device according to one of claims 1 to 3, **characterised in that** a saw cable impact protection roller (8), the axis of rotation (11) of which extends parallel to the axis of rotation (7) of the deflecting roller (3), is rotatably arranged between the deflecting roller (3) and the receiving region (4) and between the guide surfaces (18).

5. Device according to claim 4, **characterised in that** the distance (B) between the deflecting roller (3) and the saw cable impact protection roller (8) as measured perpendicularly to the axis of rotation (7) of the deflecting roller (3) substantially corresponds to the cross section of the saw cable (13).

6. Device according to claim 4 or claim 5, **characterised in that** the outer contour (15) of the saw cable impact protection roller (8) is provided with a circumferential recess (20).

7. Device according to one of claims 4 to 6, **characterised in that** at least the circumferential end region of the saw cable impact protection roller (8) is formed of a resilient material.

8. Device according to one of claims 1 to 7, **characterised in that** the circumference of the deflecting roller (3) can be at least partially covered by a cover (9).

9. Device according to claim 8, **characterised in that** the cover (9) has at least two clamping elements (10) serving to fix the cover to the supporting arms (6) and extending over at least part of the entire length of the cover.

## Revendications

1. Dispositif pour dévier un câble de scie (13), comprenant un élément porteur (1) traversé par le câble de scie (13) et comprenant au moins un élément de déviation (2) qui peut être solidarisé en rotation à l'élément porteur (1) et qui comporte une zone réceptrice (4) pouvant être associée à l'élément porteur (1) ainsi que deux bras porteurs (6) qui s'étendent parallèlement l'un à l'autre et entre lesquels est montée à rotation une poulie de déviation (3) pourvue, sur son contour extérieur périphérique (15), d'une gorge périphérique (16) adaptée à la section transversale du câble de scie (13), **caractérisé en ce que**, dans une zone dépassant du contour extérieur de la poulie de déviation (3), l'élément de déviation (2) comporte deux surfaces de guidage (18) tournées l'une vers l'autre et s'étendant perpendiculairement à l'axe de rotation (7) de la poulie de déviation (3), la distance (A) entre les deux surfaces de guidage (18) étant supérieure à la section transversale du câble de scie (13) et correspondant au plus sensiblement à la largeur de la poulie de déviation (3) mesurée parallèlement à l'axe de rotation (7).

2. Dispositif selon la revendication 1, **caractérisé en ce que** les surfaces de guidage (18) s'étendent sur 25 % à 100 % de la circonférence de la poulie de déviation (3).

3. Dispositif selon la revendication 1 ou 2, **caractérisé en ce que** les surfaces de guidage (18) sont formées par des éléments d'usure remplaçables (19) fixés aux bras porteurs (6).

4. Dispositif selon une des revendications 1 à 3, **caractérisé en ce qu'**entre la poulie de déviation (3) et la zone réceptrice (4) ainsi qu'entre les surfaces de guidage (18) est disposé à rotation un galet antibattement de câble de scie (8) dont l'axe de rotation (11) s'étend parallèlement à l'axe de rotation (7) de la poulie de déviation (3).

5. Dispositif selon la revendication 4, **caractérisé en ce que** la distance (B), mesurée perpendiculairement à l'axe de rotation (7) de la poulie de déviation (3), entre la poulie de déviation (3) et le galet antibattement de câble de scie (8) correspond sensiblement à la section transversale du câble de scie (13).

6. Dispositif selon la revendication 4 ou 5, **caractérisé en ce que** le contour extérieur (15) du galet antibattement de câble de scie (8) est pourvu d'une dépression périphérique (20).

7. Dispositif selon une des revendications 4 à 6, **caractérisé en ce qu'**au moins la zone d'extrémité périphérique du galet antibattement de câble de scie (8) est formée de matière élastique.

8. Dispositif selon une des revendications 1 à 7, **caractérisé en ce que** la circonférence de la poulie de déviation (3) peut être au moins en partie recouverte par un moyen de recouvrement (9).

9. Dispositif selon la revendication 8, **caractérisé en ce que** le moyen de recouvrement (9) comporte au moins deux éléments de serrage (10) qui servent à le fixer aux bras porteurs (6) et qui s'étendent sur au moins une partie de sa longueur totale.
